# EUROPÄISCHE PATENTSCHRIFT

(11) **EP 0 825 081 B1**
(45) Veröffentlichungstag und Bekanntmachung des Hinweises auf die Patenterteilung: **27.03.2002**
(21) Anmeldenummer: 97112246.0
(22) Anmeldetag: 17.07.1997
(51) Int. Cl.: B60T 13/74

(54) **Kraftfahrzeug mit einer Feststellbremsanlage**
Motor vehicle with park brake system
Véhicule à moteur ayant un systèm de freinage de stationnement

(30) Priorität: 14.08.1996 DE 19632863
(43) Veröffentlichungstag der Anmeldung: 25.02.1998
(73) Patentinhaber: Bayerische Motoren Werke Aktiengesellschaft, 80788 München (DE)
(72) Erfinder: Siepker, Achim, 80804 München (DE)

(56) Entgegenhaltungen:
- EP-B- 0 478 642
- DE-A- 19 516 639
- DE-C- 3 518 715

## Beschreibung

Die Erfindung bezieht sich auf ein Kraftfahrzeug mit einer Feststellbremsanlage, die durch Fremdkraft betätigbar ist

Aus der EP 0 478 642 B1 ist ein Kraftfahrzeug bekannt, bei dem ein Elektromotor mit einer Gewindespindel auf die Feststellbremse wirkt. Durch die Fremdkraftbetätigung der Feststellbremse ergibt sich eine Entlastung des Fahrers. Außerdem sind Komfortfunktionen wie "Ampelstop", "Anfahrhilfe", etc. realisierbar.

In der deutschen Patentanmeldung 195 16 639 sowie in EP 0 741 066 A als Mitglied der Patentfamilie ist ein Kraftfahrzeug beschrieben, dessen Feststellbremse auch durch einen hydraulischen Druckerzeuger, wie z. B. einen fremdansteuerbaren Bremskraftverstärker oder eine ASC-Pumpe, betätigbar ist

Aufgabe der Erfindung ist es, die bekannten Feststellbremsanlagen weiterzubilden.

Diese Aufgabe wird durch die Merkmale des Anspruchs 1 gelöst.

Durch die erfindungsgemäße Kombination von hydraulischer und elektromechanischer Betätigung der Feststellbremse können die Vorteile der beiden Systeme jeweils optimal genutzt werden.
Die Wahl der Betriebsart bzw. der Wechsel zwischen den beiden Betriebsarten erfolgt bevorzugt selbstätig, d. h. ohne Zutun des Fahrers, indem ein oder mehrere Steuergeräte, die Kenngrößen von Fahrzeug, Umgebung, Fahrerwunsch, etc. berücksichtigen, entsprechend auf den hydraulischen Druckerzeuger bzw. dessen Ventile und die elektromechanische Stelleinheit einwirken.

Die hydraulische Betätigung ermöglicht ein schnelles Spannen und Lösen der Feststellbremse (wenige Zehntelsekunden gegenüber ein bis zwei Sekunden bei elektromechanischer Betätigung) und ist systembedingt auf eine hohe Anzahl von Lastwechseln ausgelegt. Durch die hydraulische Betätigung können problemlos hohe Bremsdrücke aufgebracht werden, während dies bei elektromechanischen Stelleinheiten einen relativ großen Aufwand (Kosten, Gewicht, Bauraum) verursacht.
Die elektromechanische Stelleinheit ist - ein intaktes Fahrzeugbordnetz vorausgesetzt - unabhängig vom Betriebszustand des Fahrzeugs einsatzbereit

Die hydraulische Betätigung der Feststellbremse ist bei solchen Fahrzeugen, die neben dem primären Betriebsbremskreis einen Sekundärbremskreis aufweisen, mit einem nur sehr geringen Zusatzaufwand möglich. Ein derartiger Sekundärbremskreis dient beispielsweise der Antriebsschlupfregelung (ASC) oder der Stabilitätskontrolle (DSC) und weist als Druckerzeuger z. B. einen fremdansteuerbaren Bremskraftverstärker oder eine eigene Pumpe (ASC- oder DSC-Pumpe) auf.
Die elektromechanische Stelleinheit besteht in der Regel aus einem Elektromotor mit einem selbsthemmend ausgelegten Getriebe.

Die Feststellung bei hydraulischer Betätigung kann sowohl über die Bremsbacken der Betriebsbremse als auch über eigene Feststellbremsbacken erfolgen.
Die elektromechanische Stelleinheit wirkt in der Regel auf Bremsbacken, die entweder auf Bremsscheiben oder Bremstrommeln der Betriebsbremse oder auf eigene Bremstrommeln wirken.

Durch die Kombination der beiden Betätigungsarten ergibt sich eine Reihe von funktionellen Vorteilen, die anhand der möglichen Ausgestaltungen der Erfindung nachfolgend verdeutlicht werden. Dabei ist es ausreichend, die elektromechanische Stelleinheit für eine nur relativ geringe Anzahl von Lastwechseln auszulegen, da insbesondere die häufig einsetzenden Komfortfunktionen (Ampelstop, Anfahrhilfe) von der hydraulischen Betätigung übernommen werden können.

Selbstverständlich ist die Feststellbremsanlage so auszulegen, daß die Übergabe an die jeweils andere Betätigungseinrichtung erst dann erfolgt, wenn im übemehmenden System eine Bremskraft aufgebaut ist, die mindestens so hoch ist wie die Bremskraft im übergebenden System.

Erfindungsgemäß wird grundsätzlich eine Aufteilung der Einsatzbereiche von hydraulischer und elektromechanischer Betätigung der Feststellbremse gemäß Anspruch 2 angestrebt Während bei Nutzung des Fahrzeugs die Feststellbremse hydraulisch betätigt wird und hierbei auch alle Komfortfunktionen (Ampelstop, Anfahrhilfe) hydraulisch erfolgen, übernimmt spätestens mit dem Verlassen des Fahrzeuges die elektromechanische Stelleinheit die Arretierung der Feststellbremse. Durch diese Aufteilung wird die überwiegende Anzahl der Betätigungen der Feststellbremse hydraulisch absolviert. Bei abgestelltem Fahrzeug (sowie weiteren in den Unteransprüchen beschriebenen Betriebszuständen des Fahrzeugs) wird der hydraulische Druckerzeuger von dem autarken System der elektromechanischen Stelleinheit abgelöst, das in der Lage ist, auch bei Verlassen des Fahrzeuges über einen längeren Zeitraum durch mechanische Arretierung die Feststellwirkung aufrecht zu erhalten. Beim Wechsel auf die elektromechanische Betätigung kann bei solchen Bremsanlagen, bei denen hydraulische und elektromechanische Betätigung auf ein und dieselben Feststellorgane der Feststellbremse wirken, die elektromechanische Stelleinheit die bereits vorgespannte Bremse übernehmen und damit einen Teil der hydraulisch aufgebrachten Spannarbeit nutzen.

Unter "Nutzung des Kraftfahrzeugs" wird allgemein der Betrieb des Fahrzeugs verstanden, einschließlich kürzerer Fahrtunterbrechungen, während derer die Insassen im Fahrzeug bleiben. Mit dem "Abstellen des Kraftfahrzeugs" hingegen wird dieses in der Regel auch verlassen.

Aufgrund der überwiegend hydraulischen Betätigung der Feststellbremse ist die elektromechanische Stelleinheit auf eine nur geringe Anzahl von Lastwechseln auszulegen. Damit kann zum einen eine geringe Baugröße der Stelleinheit erreicht werden. Andererseits reduzieren sich die Herstellkosten für die Stelleinheit, da kostengünstigere Materialien verwendet werden können, beispielsweise ein Kunststoffgehäuse anstelle eines Metallgehäuses. Eine geringere Dimensionierung der elektromechanischen Stelleinheit ergibt sich auch aus den geringeren Anforderungen bezüglich der Dynamik, da alle zeitkritischen Feststellvorgänge durch die hydraulische Betätigung realisiert werden können. Somit ist die elektramechanische Stelleinheit hinsichtlich ihrer Leistung lediglich auf sicheres Feststellen und Arretieren (für längere Stillstandszeiten oder vor dem Verlassen des Fahrzeuges) zu dimensionieren, wofür relativ geringe Stellgeschwindigkeiten genügen.

Zwar ist aus der DE 35 18 715 C2 eine Feststellbremseinrichtung bekannt, die hydraulisch auf diejenige Achse des Fahrzeugs wirkt, die nicht mit einer durch Muskelkraft betätigbaren Feststellbremse ausgerüstet ist. Um auch bei längeren Stillstandszeiten des Fahrzeugs die hydraulische Feststellwirkung aufrechterhalten zu können, ist eine permanente Überwachung des hydraulischen Feststellkreises erforderlich, die im Abstand von zehn bis dreißig Minuten durch Ansteuerimpulse an einen Elektromotor einen wiederholten Druckaufbau im hydraulischen Feststellbremskreis erzeugt Hierdurch werden die unvermeidlichen Leckverluste im Hydraulikkreis ausgeglichen. Die bekannte Lösung, deren Aufgabe sich grundlegend von der Zielsetzung der vorliegenden Erfindung unterscheidet, ist sehr aufwendig und teuer. Im Gegensatz zur erfindungsgemäßen Lösung ist bei der DE 35 18 715 C2 keine elektromechanische Fremdkraftbetätigung vorgesehen.

Die Ansprüche 3 und 4 beschreiben verschiedene Betriebszustände des Kraftfahrzeuges, von denen ausgehend die hydraulische Betätigung einsetzt und die vorangegangene elektromechanische Betätigung ablöst. Entsprechend wird in umgekehrter Richtung die hydraulische durch die elektromechanische Feststellung ersetzt, sobald der in den Ansprüchen 3 und 4 beschriebene Betriebszustand des Fahrzeugs wieder verlassen wird. Ausnahmen hiervon sind jedoch möglich (siehe beispielsweise Ansprüche 7 bis 9).

Gemäß der Alternative a) von Anspruch 3 erfolgt bereits vor dem Einsteigen des Fahrers ein Wechsel auf die hydraulische Betätigung. Hierdurch wird die Geräuschentwicklung durch den Wechsel der Betätigungsart bzw. das Anlaufen des hydraulischen Systems, die von einem Fahrzeuginsassen als unangenehm empfunden werden könnte, auf einen Zeitpunkt vor dem Einsteigen in das Fahrzeug verlegt. Bei Fembetätigung des Türschlosses über einen sogenannten "Funkschlüssel" kann der Wechsel auf die hydraulische Betriebsart auf einen besonders frühen Zeitpunkt vor dem Einsteigen in das Fahrzeug gelegt werden.
Bei der Variante b) von Anspruch 3 wird in dem Augenblick, in dem der Fahrer auf dem Fahrersitz Platz genommen hat, auf die hydraulische Betätigung umgeschaltet.
Anspruch 3, Variante c) beschreibt eine weitere Möglichkeit, nach der erst mit eingeschalteter Zündung die hydraulische Betätigung der Feststellbremse erfolgt. Selbstverständlich kann der Wechsel in der Betätigungsart auch bereits in der "Radiostellung" des Zündschlüssels erfolgen, in der verschiedene Stromverbraucher des Fahrzeugs bereits an das Bordnetz angebunden sind.

Bei den Ausgestaltungen der Erfindung nach Anspruch 3 ist sichergestellt, daß das hydraulische System bereits vor dem Anlassen der Brennkraftmaschine des Fahrzeugs aktiviert ist und damit in jedem Fall vor dem Anfahren des Fahrzeugs zur Verfügung steht. Voraussetzung hierfür ist, daß ein von der Brennkraftmaschine unabhängig arbeitender hydraulischer Druckerzeuger zur Verfügung steht.

Anspruch 4 macht die hydraulische Betätigung davon abhängig, daß die Brennkraftmaschine des Fahrzeugs in Betrieb ist. Bei Druckerzeugern, die von der Brennkraftmaschine angetrieben werden, kann der Wechsel auf die hydraulische Betätigung prinzipbedingt sowieso erst mit dem Anlassen der Brennkraftmaschine erfolgen.

Gemäß Anspruch 5 wird der Einsatz der hydraulischen Betätigung auf einen Zeitpunkt unmittelbar vor dem Anfahren des Fahrzeugs verlegt. Hierdurch wird ein unnötiger Wechsel zwischen den einzelnen Betätigungsarten, wie er sich z. B. bei mehrmaligem Abstellen und Wiederanlassen des Motors ergeben würde, vermieden. Auf einen Anfahrvorgang kann beispielsweise dann geschlossen werden, wenn die Kupplung getreten wird oder ein ausreichendes Anfahrmoment zur Verfügung steht .Die Anfahrhilfe wird bei der Konstellation nach Anspruch 5 durch dosiertes Lösen ausschließlich der hydraulischen Feststellung realisiert

Wie bereits oben angesprochen, erfolgt der Rücksprung von hydraulischer auf elektromechanische Betätigung, sobald die "Einschaltbedingung" für das hydraulische System nicht mehr vorliegt. Beispielsweise wird bei einer Feststellbremsanlage nach Anspruch 4 mit dem Abstellen der Brennkraftmaschine auf das elektromechanische System umgeschaltet. Eine mögliche Ausnahme hiervon ist der Fall einer stillstehenden Brennkraftmaschine bei eingeschalteter Zündung. Diese Konstellation liegt beispielsweise nach einem mißglückten Anfahrversuch mit einem Fahrzeug mit Schaltgetriebe vor. Um ein unnötiges Hin- und Herschalten zwischen hydraulischer und elektromechanischer Feststellung zu vermeiden, ist es für diesen Fall zweckmäßig, die Feststellbremse weiterhin ausschließlich hydraulisch zu betätigen. Der zunächst unterdrückte Wechsel auf die elektromechanische Betätigung erfolgt jedoch bei Vorliegen eines weiteren Signals (z. B. geöffneter Kontakt an der Fahrertür oder am Fahrersitz) oder nach Ablauf einer vorgegebenen Zeit ab dem Stillstand der Brennkraftmaschine.

Weitere vorteilhafte Möglichkeiten der Wahl von hydraulischer oder elektromechanischer Betätigung ergeben sich aus den nachfolgenden Unteransprüchen, die Ausnahmen der grundsätzlichen Auswahlbedingungen gemäß den Ansprüchen 2 bis 5 darstellen.

Bei Inbetriebnahme des abgestellten Fahrzeugs ist es in der Regel von Vorteil, die elektromechanisch gespannte Feststellbremse ohne den Umweg über den Wechsel auf hydraulische Betätigung direkt zu lösen (Anspruch 6). Dies setzt lediglich voraus, daß eine eventuell vorgesehene Anfahrhilfefunktion (zur Erleichterung des Anfahrens mit einem Schaltgetriebe-Fahrzeug am Berg) auch mit der elektromechanischen Stelleinheit umgesetzt werden kann. Das (undosierte) Lösen der Feststellbremse bei allen übrigen Anfahrvorgängen in der Ebene stellt ohnehin kein Problem dar.
Bei Fahrzeugen mit Automatikgetrieben kann mit dem Herausbewegen des Wählhebels aus der Stellung P die elektromechanisch gespannte Feststellbremse ebenfalls ohne weiteres direkt gelöst werden: Ein unerwünschtes Wegrollen des Fahrzeuges wird einerseits dadurch ausgeschlossen, daß für die Wählhebelbewegung die Betriebsbremse betätigt werden muß. Andererseits wirkt beim Anfahren an einer Steigung das vom Wandler bereitgestellte Anfahrdrehmoment einem Rückwärtsrollen des Fahrzeuges entgegen. Durch die Erfindung kann ein aufwendiger Mechanismus zum selbsttätigen Lösen der Feststellbremse, wie er beispielsweise aus dem Cadillac Sevillia bekannt ist, ersetzt werden. Des weiteren kann auch die Gaspedalstellung oder das von der Brennkraftmaschine bereitgestellte Anfahrmoment als Kriterium für das Lösen der Feststellbremse herangezogen werden.

Durch die Weiterbildung der Erfindung nach Anspruch 7 wird bei Fahrzeugen mit einem Automatikgetriebe mit dem Einlegen der Gangstufe P (Parkstellung des Automatikgetriebes) auch bei laufendem Motor bereits die elektromechanische Betätigung der Feststellbremse auslöst. Dies hat seinen Grund darin, daß mit der Anwahl der Gangstufe P in der Regel der Wunsch des Fahrers verbunden ist, längere Zeit stehenzubleiben oder das Fahrzeug nachfolgend abzustellen. Durch die Ausgestaltung der Erfindung nach Anspruch 7 kann die Getriebebremse bei Automatikgetrieben (Parkbremse) unter Umständen entfallen.

Auch bei geöffneter Motorhaube (Anspruch 8) ist die elektromechanische Feststellung sinnvoll, da in diesem Fall von einer längeren Fahrtunterbrechung auszugehen ist. Auch sprechen Sicherheitsgründe für die elektromechanische Betätigung der Feststellbremse. Um ein Anfahren mit dem Kraftfahrzeug mit Sicherheit auszuschließen, ist das Signal "geöffnete Motorhaube" als dominates Kriterium auszulegen, so daß auch bei entsprechender Gaspedalstellung oder ausreichendem Anfahrmoment (Ampelstop-Funktion) die Feststellbremse nicht gelöst werden kann.

Durch die Weiterbildung der Erfindung nach Anspruch 9 (zeitverzögert und selbsttätig erfolgender Wechsel auf die elektromechanische Betätigung der Feststellbremse) wird eine Überlastung der Absperrventile in der Hydraulikeinheit des Sekundärbremskreises vermieden. Durch die Entlastung der Hydraulik können Ventile mit geringerer Dauerfestigkeit eingesetzt werden. Darüber hinaus bewirkt der automatische Wechsel auf eine elektromechanische Betätigung bei solchen Fahrzeugen, die bei abgeschalteter Brennkraftmaschine und eingeschalteter Zündung die Feststellbremse hydraulisch betätigen, eine Erhöhung der Betriebssicherheit, da bei längerem Fahrzeugstillstand durch die unvermeidlichen Leckverluste der "eingesperrte Flüssigkeitsdruck" und damit die Feststellwirkung nachlassen würde. Beispielsweise kann eine Umschaltung nach zwei Minuten ab Beginn der hydraulischen Feststellung erfolgen.

Anspruch 10 beschreibt eine an sich bereits aus der deutschen Patentanmeldung 195 16 639 bekannte Bremsanlage, bei der für eine Notbremsung (bei Ausfall der Betriebsbremse) der hydraulische Sekundärbremskreis eingesetzt wird. Die Notbremsung kann hierbei über dieselbe Einrichtung eingeleitet werden, die auch die fremdkraftbetätigte Feststellbremse ansteuert: Unterhalb einer festgelegten Geschwindigkeit von wenigen Stundenkilometern wird die Feststellbremse beispielsweise durch einmaliges Antippen eines elektrischen Tasters betätigt. Oberhalb der festgelegten Geschwindigkeit hingegen ist, wie aus der EP 0 478 642 B1 bekannt, eine Dauerbetätigung des elektrischen Tasters erforderlich, um die beschriebene Notbremsung über die Feststellbremsanlage einzuleiten.

Gemäß Anspruch 11 wird eine Redundanz im Notbremssystem dadurch erzeugt, daß nach Einleitung der Notbremsung bei zu geringer Fahrzeugverzögerung auf einen Defekt im Sekundärbremskreis, z. B. den Ausfall der hydraulischen Pumpe oder den Bruch einer Hydraulikleitung, geschlossen wird. Für diesen Fall erfolgt automatisch und mit möglichst stetem Übergang der Wechsel auf die elektromechanische Stelleinheit, die somit die Notbremsung fortsetzt bzw. einleitet. Selbstverständlich können auch beide Systeme gleichzeitig aktiviert werden, um eine bestmögliche Abbremsung zu erreichen.

Die Ansprüche 12 und 13 beschreiben weitere Komfort- und Sicherheitsfunktionen der erfindungsgemäßen Feststellbremsanlage.

So wird nach Anspruch 12 eine versehentlich nicht gelöste Feststellbremse bei Überschreiten einer vorgegebenen Fahrzeuggeschwindigkeit automatisch gelöst. Hierdurch kann auf besonders einfache Weise eine Überhitzung der Fahrzeugbremskomponenten, die schwerwiegende Defekte an der Bremsanlage nach sich ziehen kann, vermieden werden. Diese Sicherheitsfunktion ist bei fremdkraftbetätigten Feststellbremsanlagen ohne Komfortfunktionen (Ampelstop, Anfahrhilfe) interessant, bei denen die Feststellbremse mit dem Anfahren des Kraftfahrzeugs nicht selbsttätig gelöst wird.

Wie an sich bereits aus der EP 0 478 642 B1 bekannt, wird gemäß Anspruch 13 bei Stillstand des Kraftfahrzeuges die Feststellbremse selbsttätig aktiviert Dies erfolgt erfindungsgemäß grundsätzlich zunächst durch die Hydraulik des Sekundärbremskreises. Diese "Auto-Stop-Funktion" ist bevorzugt zu- und abschaltbar zu gestalten, wobei die Anwahl beispielsweise durch einen Schiebe-Druck-Taster realisiert werden kann. Ein derartiger Taster weist z. B. einen Bedienknopf auf, der in die beiden Stellungen "Feststellbremse spannen"/"Feststellbremse lösen" geschoben werden kann, um die Feststellbremse im Einzelfall über Fremdkraft zu betätigen oder zu lösen. Durch Tastendruck senkrecht zur Schieberichtung wird der automatische Feststellmodus (Auto-Stop-Funktion) angewählt. Emeuerter Tastendruck schaltet wieder auf den Modus "willentliche Feststellung des Fahrzeuges durch den Fahrer" zurück. Die Auto-Stop-Funktion ist beispielsweise bei Stop- and Go-Verkehr von Vorteil. Die angewählte Auto-Stop-Funktion kann darüber hinaus beispielsweise bei erstmaligem Überschreiten einer vorgegebenen Geschwindigkeit (z. B. 50 km/h) oder einer vorgegebenen Gangstufe (z. B. vierter Gang) selbsttätig wieder ausgeschaltet werden.

Die Weiterbildung der Erfindung nach Anspruch 14 betrifft ausschließlich Spezialfahrzeuge, wie z. B. für den Rennsport oder Sicherheitsfahrzeuge, bei denen eine "Handbremswende" durchführbar sein sollte. Ein derartiges Fahrmanöver wird beispielsweise durch ein separates Bedienelement eingeleitet, das während der Dauer der Wende betätigt werden muß. Alternativ kann die Ansteuerung auch über dasselbe Bedienelement eingeleitet werden, das das Feststellen des Fahrzeugs bewirkt, wobei zur Ansteuerung der Bremse zusätzlich der Lenkwinkel an der Vorderachse herangezogen werden kann.

Bei der Dosierung der Feststellkraft nach Anspruch 15 wird nicht generell die maximal mögliche Spannkraft, sondern lediglich die für das Halten der Fahrzeuges erforderliche Spannkraft, versehen mit einem Sicherheitszuschlag, aufgebracht. Bei hydraulischer Betätigung ergibt sich hieraus der Vorteil eines weicheren und besser dosierbaren Lösens der Feststellbremse. Bei elektromechanischer Betätigung wird durch die Zurücknahme der Spannkraft an den Feststellbremsen eine Reduzierung der Belastung der elektromechanischen Stelleinheit erreicht. Der erforderliche Bremsdruck wird durch Messung des zum Halten benötigten hydraulischen Bremsdruckes ermittelt und eingestellt. Bei der bedarfsorientierten Bemessung der Feststellkraft einer elektromechanischen Feststellbremse ist idealerweise ein aktiv und permanent überwachendes System vorzusehen, das bedarfsweise die Spannkraft erhöht, z. B. bei Veränderung der Neigung des Fahrzeugs (z. B. Transport des Fahrzeuges auf Schiffen, Veränderung der Neigung am Stellplatz einer Duplex-Garage etc.).
Auch kann durch ein solches System der Spannnkraftverlust bei der Bremsscheibenabkühlung bei solchen Bremssätteln, bei denen Betriebs- und Feststellbremse auf eine gemeinsame Bremsscheibe wirken, kompensiert werden. Alternativ kann auch über ein Temperaturmodell, das die vorangegangenen Bremsvorgänge zählt und bewertet, die Temperatur an der Bremsscheibe errechnet und daraus die erforderliche Spannkraft für ein sicheres Halten des Fahrzeuges auch bei abkühlender Bremsscheibe eingestellt werden.

Durch die Weiterbildung der Erfindung nach Anspruch 16 wird insbesondere bei Feststellbremsen mit separater Bremstrommel derjenige Teil der Feststellbremsanlage, der durch die elektromechanische Stelleinheit bewegt wird, über der Lebensdauer des Fahrzeuges gangbar gehalten. Bei seltener Betätigung der Feststellbremse neigt diese ansonsten zur Schwergängigkeit. Außerdem werden die Bremsbacken nur unzureichend auf die Bremstrommeln eingeschliffen. Durch wiederholtes leichtes Einbremsen der Feststellbremse in solchen Situationen, die die Fahrsicherheit auf keinen Fall beeinträchtigen (beispielsweise beim Ausrollen des Fahrzeugs vor einer Ampel), wird die Feststellbremse geringfügig und für den Fahrer unbemerkt betätigt.

## Patentansprüche

1. Kraftfahrzeug mit einer Feststellbremsanlage, deren Reibungsbremsen sowohl durch einen hydraulischen Druckerzeuger auf hydraulischen Wege als auch unter Umgehung dieser hydraulischen Übertragung direkt durch eine elektromechanische Stelleinheit betätigbar sind, sowie mit Mitteln, welche die Betätigungsart (hydraulisch oder elektromechanisch) festlegen und fallweise einen Wechsel zwischen den beiden Betätigungsarten bewirken,
**dadurch gekennzeichnet, dass** die Übergabe von einer die erste Betätigungsart ausübenden Betätigungseinrichtung auf eine die zweite Betätigungsart ausübenden Betätigungseinrichtung erst dann erfolgt, wenn in der die Brems-Betätigung übernehmenden Betätigungseinrichtung eine Bremskraft aufgebaut ist, die mindestens so hoch ist wie die Bremskraft in der übergebenden Betätigungseinrichtung.

2. Kraftfahrzeug nach Anspruch 1,
**dadurch gekennzeichnet, daß** die Feststellbremse bei Nutzung des Kraftfahrzeugs grundsätzlich hydraulisch und bei abgestelltem Kraftfahrzeug grundsätzlich elektromechanisch betätigt wird.

3. Kraftfahrzeug nach Anspruch 1 und/oder 2,
**dadurch gekennzeichnet, daß**, ausgehend von der elektromechanischen Betätigung der Feststellbremse
a) mit der Aktivierung des fahrerseitigen Türschlosses oder dem Öffnen der Fahrertür oder
b) mit der Belegung des Fahrersitzes oder
c) mit dem Einschalten der Zündung
der Wechsel auf die hydraulische Betätigung erfolgt und/oder der Wechsel in umgekehrter Richtung sinngemäß bei Wegfall der Bedingungen a) bis c) erfolgt.

4. Kraftfahrzeug nach einem der vorangegangenen Ansprüche, mit einer Brennkraftmaschine zum Antrieb des Kraftfahrzeugs,
**dadurch gekennzeichnet, daß**, ausgehend von der elektromechanischen Betätigung der Feststellbremse, mit dem Anlassen der Brennkraftmaschine der Wechsel auf die hydraulische Betätigung erfolgt und/oder der Wechsel in umgekehrter Richtung mit dem Abschalten der Brennkraftmaschine erfolgt.

5. Kraftfahrzeug nach einem der vorangegangenen Ansprüche, mit einem Schaltgetriebe im Antriebsstrang des Kraftfahrzeugs sowie einer AnfahrhilfeFunktion,
**dadurch gekennzeichnet, daß**, ausgehend von der elektromechanischen Betätigung der Feststellbremse, nach dem Anlassen der Brennkraftmaschine eine hydraulische Betätigung der Feststellbremse erst dann erfolgt, wenn durch den Fahrer Maßnahmen eingeleitet werden, die auf einen Anfahrvorgang schließen lassen.

6. Kraftfahrzeug nach einem der vorangegangenen Ansprüche,
**dadurch gekennzeichnet, daß**, ausgehend vom abgestellten Kraftfahrzeug, die Feststellbremse mit dem Anfahren des Kraftfahrzeugs unmittelbar aus der elektromechanischen Betätigung heraus gelöst wird.

7. Kraftfahrzeug nach einem der vorangegangenen Ansprüche, mit einem Automatikgetriebe im Antriebsstrang des Kraftfahrzeuges,
**dadurch gekennzeichnet, daß** die Feststellbremse in der Parkstellung des Automatikgetriebes elektromechanisch betätigt wird.

8. Kraftfahrzeug nach einem der vorangegangenen Ansprüche,
**dadurch gekennzeichnet, daß** die Feststellbremse bei geöffneter Motorhaube elektromechanisch betätigt wird.

9. Kraftfahrzeug nach einem der vorangegangenen Ansprüche,
**dadurch gekennzeichnet, daß** nach Ablauf einer festgelegten Zeitdauer ab Beginn einer hydraulischen Betätigung der Feststellbremse ein Wechsel auf elektromechanische Betätigung erfolgt.

10. Kraftfahrzeug nach einem der vorangegangenen Ansprüche,
**dadurch gekennzeichnet, daß** oberhalb einer Grenzgeschwindigkeit des Kraftfahrzeuges durch Ansteuerung des hydraulischen Druckerzeugers eine Notbremsung über die Feststellbremsanlage des Kraftfahrzeuges eingeleitet werden kann.

11. Kraftfahrzeug nach Anspruch 10,
**dadurch gekennzeichnet, daß** bei Unterschreitung eines vorgegebenen Verzögerungswertes während der hydraulisch bewirkten Notbremsung ein Wechsel auf elektromechanische Betätigung erfolgt.

12. Kraftfahrzeug nach einem der vorgenannten Ansprüche,
**dadurch gekennzeichnet, daß** die Feststellbremse oberhalb einer festgelegten Fahrzeuggeschwindigkeit selbsttätig gelöst wird.

13. Kraftfahrzeug nach einem der vorangegangenen Ansprüche,
**dadurch gekennzeichnet, daß** die Feststellbremse bei Stillstand des Kraftfahrzeuges selbsttätig betätigt wird.

14. Kraftfahrzeug nach einem der vorangegangen Ansprüche,
**dadurch gekennzeichnet, daß** oberhalb einer festgelegten Fahrzeuggeschwindigkeit durch Ansteuerung des hydraulischen Druckerzeugers ein Blockieren eines Rades oder der Räder einer Achse oder der Räder einer Fahrzeugseite eingeleitet werden kann.

15. Kraftfahrzeug nach einem der vorgenannten Ansprüche,
**dadurch gekennzeichnet, daß** die Feststellkraft entsprechend der erforderlichen Feststellwirkung bemessen wird.

16. Kraftfahrzeug nach einem der vorangegangenen Ansprüche,
**dadurch gekennzeichnet, daß** die Feststellbremse ohne Zutun des Fahrers in bestimmten Zeitabständen zum Zweck der Instandhaltung elektromechanisch betätigt wird.

## Claims

1. A motor vehicle with a parking brake system, the friction brakes of which are operable both by a hydraulic pressure generator, by hydraulic means, and also, circumventing this hydraulic transmission, directly by means of an electronic control unit, as well as possessing means which define the mode of operation (hydraulic or electromechanical) and effect a changeover between the two modes of operation in different cases, **characterised in that** the handover from an operating device effecting the first mode of operation to an operating device effecting the second mode of operation only takes place once a braking force has built up in the operating device taking over the operation of the brakes which is at least as high as the braking force in the operating device which is handing over.

2. A motor vehicle in accordance with claim 1,
**characterised in that**, when the motor vehicle is in use, the parking brake is basically operated hydraulically, and is basically operated electromechanically when the motor vehicle is parked.

3. A motor vehicle in accordance with claim 1 and/or 2,
**characterised in that**, starting out from electromechanical operation of the parking brake, the changeover to hydraulic operation takes place
a) with the activation of the driver's-side door lock or opening of the driver's door or
b) with occupation of the driver's seat or
c) on switching on the ignition
and/or the changeover in the reverse direction occurs analogously when the conditions a) to c) no longer exist.

4. A motor vehicle in accordance with one of the preceding claims, with an internal combustion engine for driving the motor vehicle,
**characterised in that**, starting out from electromechanical operation of the parking brake, the changeover to hydraulic operation takes place when the internal combustion engine is started up and/or the changeover in the reverse direction takes place when the internal combustion engine is switched off.

5. A motor vehicle in accordance with one of the preceding claims, with a manual gear box in the drive train of the motor vehicle and a starting-aid function,
**characterised in that**, starting out from electromechanical operation of the parking brake, hydraulic operation of the parking brake only takes place if measures are initiated by the driver which indicate a starting-up procedure.

6. A motor vehicle in accordance with one of the preceding claims,
**characterised in that**, starting out from the parked vehicle, the parking brake is released directly from electromechanical operation when the motor vehicle is started up.

7. A motor vehicle in accordance with one of the preceding claims, with an automatic transmission system in the drive train of the motor vehicle,
**characterised in that** the parking brake is operated electromechanically when the automatic transmission is in park setting.

8. A motor vehicle in accordance with one of the preceding claims,
**characterised in that** the parking brake is operated electromechanically when the hood is open.

9. A motor vehicle in accordance with one of the preceding claims,
**characterised in that** a changeover to electromechanical operation takes place after expiry of a predefined period of time from the start of hydraulic operation.

10. A motor vehicle in accordance with one of the preceding claims,
**characterised in that**, above a threshold speed of the motor vehicle, emergency braking via the motor vehicle's parking brake system can be initiated through actuation of the hydraulic pressure generator.

11. A motor vehicle in accordance with claim 10,
**characterised in that** a changeover to electromechanical operation takes place during the hydraulically-activated emergency braking if a predefine deceleration value is not attained.

12. A motor vehicle in accordance with one of the preceding claims,
**characterised in that** the parking brake is released automatically above a defined vehicle speed.

13. A motor vehicle in accordance with one of the preceding claims,
**characterised in that** the parking brake is operated automatically when the motor vehicle is stationary.

14. A motor vehicle in accordance with one of the preceding claims,
**characterised in that**, above a defined vehicle speed, locking of a wheel or the wheels of an axle or the wheels on one side of the vehicle can be initiated through actuation of the hydraulic pressure generator.

15. A motor vehicle in accordance with one of the preceding claims,
**characterised in that** the braking force is dimensioned according to the necessary braking effect.

16. A motor vehicle in accordance with one of the preceding claims,
**characterised in that** the parking brake is operated electromechanically at certain intervals, without action by the driver, for the purpose of maintenance.

## Revendications

1. Véhicule automobile comportant une installation de frein de stationnement dont les freins à friction sont actionnés à la fois par un générateur de pression hydraulique, par voie hydraulique et en contournant cette transmission hydraulique, directement par un actionneur électromécanique, ainsi que des moyens permettant de fixer le mode d'actionnement (mode hydraulique ou mode électromécanique) et le cas échéant de commuter entre les deux modes d'actionnement,
**caractérisé en ce que**
le passage d'une première installation d'actionnement effectuant le premier mode d'actionnement sur une installation d'actionnement exerçant le second mode d'actionnement se fait seulement si dans l'installation d'actionnement qui reprend l'actionnement des freins, il s'est établi une force de freinage qui est au moins aussi élevée que la force de freinage exercée par l'installation d'actionnement à partir de laquelle on commute.

2. Véhicule automobile selon la revendication 1,
**caractérisé en ce que**
lorsqu'on utilise le véhicule, le frein de stationnement est actionné principalement par voie hydraulique et lorsque le véhicule est à l'arrêt, l'actionnement est principalement par voie électromécanique.

3. Véhicule automobile selon la revendication 1 et/ou 2,
**caractérisé en ce que**
partant de l'actionnement électromécanique du frein de stationnement,
a) par l'activation de la serrure du côté du conducteur ou par l'ouverture de la porte du conducteur ou,
b) par l'occupation du siège du conducteur ou,
c) par la mise en route de l'allumage, on commute sur l'actionnement hydraulique et/ou la commutation se fait en sens inverse lorsque disparaissent les conditions a)-c).

4. Véhicule automobile selon l'une des revendications précédentes comportant un moteur à combustion interne pour entraîner le véhicule,
**caractérisé en ce que**
partant de l'actionnement électromécanique du frein de stationnement, le démarrage du moteur à combustion interne produit la commutation sur le mode d'actionnement hydraulique et/ou la commutation en sens inverse par la coupure du moteur à combustion interne.

5. Véhicule automobile selon l'une des revendications précédentes comportant une boîte de vitesses dans la ligne de transmission du véhicule ainsi qu'une fonction d'assistance au démarrage,
**caractérisé en ce que**
partant de l'actionnement électromécanique du frein de stationnement, après le démarrage du moteur à combustion interne, le frein de stationnement est actionné de manière hydraulique seulement si le conducteur prend des mesures permettant de conclure qu'il s'agit d'une opération de démarrage.

6. Véhicule automobile selon l'une des revendications précédentes,
**caractérisé en ce que**
partant du véhicule à l'arrêt, on libère le frein de stationnement par le démarrage du véhicule, directement à partir de l'actionnement électromécanique.

7. Véhicule automobile selon l'une des revendications précédentes comportant une boîte de vitesses automatique dans la ligne de transmission du véhicule,
**caractérisé en ce qu'**
on actionne le frein de stationnement de manière électromécanique lorsque la boîte de vitesses automatique est en position de stationnement (parking).

8. Véhicule automobile selon l'une des revendications précédentes,
**caractérisé en ce qu'**
on actionne par voie électromécanique le frein de stationnement lorsque le capot du véhicule est ouvert.

9. Véhicule automobile selon l'une des revendications précédentes,
**caractérisé en ce qu'**
à la fin d'une durée fixée comptée à partir du début d'un actionnement hydraulique du frein de stationnement, on commute sur l'actionnement électromécanique.

10. Véhicule automobile selon l'une des revendications précédentes,
**caractérisé en ce qu'**
au-dessus d'une vitesse limite du véhicule, la commande du générateur de pression hydraulique permet un freinage de secours par l'intermédiaire de l'installation de frein de stationnement du véhicule.

11. Véhicule automobile selon la revendication 10,
**caractérisé en ce qu'**
en cas de dépassement vers le bas d'une valeur de temporisation prédéterminée, pendant le freinage de secours produit de manière hydraulique, on commute sur l'actionnement électromécanique.

12. Véhicule automobile selon l'une des revendications précédentes,
**caractérisé en ce qu'**
au-dessus d'une vitesse fixée pour le véhicule, le frein de stationnement est libéré automatiquement.

13. Véhicule automobile selon l'une des revendications précédentes,
**caractérisé en ce qu'**
à l'arrêt du véhicule, le frein de stationnement est actionné automatiquement.

14. Véhicule automobile selon l'une des revendications précédentes,
**caractérisé en ce qu'**
au-dessus d'une vitesse fixée pour le véhicule, par la commande du générateur de pression hydraulique, on bloque une roue ou les roues d'un essieu ou les roues d'un côté du véhicule.

15. Véhicule automobile selon l'une des revendications précédentes,
**caractérisé en ce qu'**
on dimensionne la force d'immobilisation selon l'effet d'immobilisation requis.

16. Véhicule automobile selon l'une des revendications précédentes,
**caractérisé en ce que**
le frein de stationnement est actionné de manière électromécanique sans intervention du conducteur, au cours d'intervalles de temps déterminés, pour assurer l'entretien du frein.
